# EUROPEAN PATENT SPECIFICATION

(11) **EP 2 244 807 B1**
(45) Date of publication and mention of the grant of the patent: **11.04.2018**
(21) Application number: 09711681.8
(22) Date of filing: 18.02.2009
(51) Int. Cl.: B01D 53/14, B01D 61/36, B01D 19/00

(54) **REGENERATOR CONFIGURATIONS AND METHODS WITH REDUCED STEAM DEMAND**
REGENERATORKONFIGURATIONEN UND VERFAHREN MIT VERMINDERTEM DAMPFBEDARF
CONFIGURATIONS DE RÉGÉNÉRATEUR ET PROCÉDÉS À DEMANDE DE VAPEUR RÉDUITE

(30) Priority: 18.02.2008 US 29536
(43) Date of publication of application: 03.11.2010
(73) Proprietor: Fluor Technologies Corporation, Aliso Viejo, CA 92698 (US)
(72) Inventor: REDDY, Satish, Irvine CA 92708 (US); SCHERFFIUS, Jeffrey, Aliso Viejo CA 92656 (US)
(74) Representative: Dr. Graf & Partner AG
(86) International application number: PCT/US2009/034405
(87) International publication number: WO 2009/105472

(56) References cited:
- EP-A2- 0 588 175
- US-A- 4 265 642
- US-A- 4 444 571
- US-A- 5 051 188
- US-A1- 2003 233 934
- US-A1- 2004 079 228
- US-A1- 2005 211 624
- US-A1- 2006 032 377
- US-A1- 2007 212 286
- US-B1- 6 174 348
- US-B1- 6 228 145
- US-B1- 6 551 380
- US-B2- 6 986 802
- US-B2- 7 175 820

## Description

### Field of The Invention

The field of the invention is configurations and methods of regeneration of solvents, and particularly steam regeneration of amine-based solvents.

### Background of the Invention

Various configurations and methods are known in the art to remove acid gas from a process gas (*e.g*., various distillation-, adsorption- and absorption processes), and among those, regenerator-absorber systems are frequently employed as a relatively robust and cost-efficient gas purification system.

In a typical regenerator-absorber system, a process gas is contacted in an absorber in a counter-current fashion and the acid gas is at least partially absorbed by a lean chemical solvent to produce a rich solvent and a purified process gas. The so formed rich solvent is then heated in a cross heat exchanger and subsequently stripped at relatively low pressure in a regenerator using steam. The so stripped solvent (*i.e.*, lean solvent) is then cooled in the cross heat exchanger to reduce the temperature in the lean solvent before completing the loop back to the absorber. Therefore, regenerator-absorber systems typically allow continuous operation at relatively low cost.

To increase capacity for carbon dioxide removal in such systems, the temperature in the regenerator may be increased. However, increased corrosivity and solvent degradation often limit the degree of optimization for this process. Also, increased operating temperature will often lead to increased operating expenses. Still further, and particularly where relatively large quantities of carbon dioxide are to be removed, substantial quantities of steam are often required in the regenerator to produce a sufficiently lean solvent. However, large quantities of steam are often costly to produce. Worse yet, where external live steam is used, the water balance of the operation is often affected and excess water needs to be removed.

Thus, there is still a need to improve solvent regenerator configurations and methods to reduce energy requirements while maintaining a desirable performance.

EP 0 588 175 A2 describes a method of regenerating a solvent comprising stripping the solvent which is in particular an amine-based solvent in a regenerator using steam as a stripping medium to produce a regenerator overhead and a regenerator bottom product and feeding steam as a stripping medium into a bottom portion of the regenerator.

Furthermore it is known from US 5 051 188 to separate dialkylureas from monoalkylamines, CO₂ and water by means of pervaporation. It is also known from US2003/0233934 to separate mixtures of organic compounds by making use of a pervaporation step in conjunction with a dephlegmation step to treat at least a portion of the permeate vapor from the pervaporation step.

### Summary of the Invention

The present invention is directed to configurations and methods of regeneration of a solvent as defined in the appended claims, and especially to recovery and re-use of steam from an aqueous solvent using one or more pervaporation units. In most typical aspects of the inventive subject matter, the solvent comprises water and at least one organic and/or inorganic agent that is suitable for the capture (adsorption or absorption) and recovery of a desired component. In such cases, at least some of the desired component is released in the regenerator, typically by some combination of energy (such as heat) and/or pressure reduction.

In one particularly preferred aspect of the inventive subject matter, a method of regenerating a (typically amine-based) solvent includes a step of stripping the solvent in a regenerator using steam as a stripping medium to produce a regenerator overhead and a regenerator bottom product. In a further step, at least a portion of the regenerator bottom product is passed through a pervaporation unit to produce a vapor phase that is enriched in steam, and in yet another step, the vapor phase is fed into the regenerator to thereby supply at least part of the stripping medium.

Viewed from a different perspective, a method of providing steam to a steam regenerator is contemplated in which the regenerator is configured to produce a regenerator bottom product from an aqueous solvent. In such methods, a portion of the regenerator bottom product is passed across a pervaporation unit to so form a steam permeate, and the so formed steam permeate is then fed to the steam regenerator.

It is generally preferred that the pressure of the portion of the regenerator bottom product is increased upstream of the pervaporation unit and/or that a vacuum unit is operated downstream of the pervaporation unit to produce a pressure gradient across the pervaporation unit. Where desired, the vapor phase may be compressed prior to feeding of the vapor phase into the regenerator (*e.g*., using a compressor or ejector). Alternatively, the compressor may also be omitted where the permeate is already at or above regenerator pressure. It is further contemplated that the quantity of regenerator bottom product may vary depending on operation conditions, desired degree of regeneration, however, it is especially preferred that the portion of the regenerator bottom product is selected such that the amount of steam in the vapor phase is equal to the amount of steam required for regeneration of the solvent in the regenerator to a desired degree. In some aspects, the portion of the regenerator bottom product will be between 10 vol% and 40 vol%, more typically between 40 vol% and 70 vol%, and most typically between 70 vol% and 100 vol% of total regenerator bottom product. Therefore, neutral water balance may be maintained for the regenerator. While not limiting to the inventive subject matter, it is generally preferred that another portion of the regenerator bottom product is combined with the retentate from the pervaporation unit to form a combined lean solvent, which is typically fed to an absorber to form a rich solvent that is then recycled back to the regenerator.

Consequently, in a still further aspect of the inventive subject matter, a solvent regeneration system is contemplated that includes a steam regenerator that is configured to allow use of steam as a stripping medium to so produce a regenerator overhead and a regenerator bottom product. A pervaporation unit is then fluidly coupled to the steam regenerator to allow feeding of at least a portion of the regenerator bottom product to the pervaporation unit to so produce a vapor phase that is enriched in steam, wherein the pervaporation unit is further configured to allow feeding of the vapor phase into the regenerator to thereby supply at least part, and preferably all, of the stripping medium.

It is generally preferred that such systems further include a pump that is fluidly and upstream coupled to the pervaporation unit, and a vacuum pump that is fluidly and downstream coupled to the pervaporation unit to generate a pressure gradient across the pervaporation unit. Additionally, or alternatively, a compressor may be fluidly coupled to the pervaporation unit to provide the vapor phase as a compressed stream to the steam regenerator. Alternatively, it may be advantageous to operate the permeate side of the pervaporation system at the regenerator pressure such that a compressor is not required. Most typically, contemplated systems will also include a conduit to combine the retentate from the pervaporation unit with another portion of the regenerator bottom product, which are then fed to an absorber to produce a rich solvent for regeneration in the regenerator.

Various objects, features, aspects and advantages of the present invention will become more apparent from the following detailed description of preferred embodiments of the invention.

### Brief Description of the Drawing

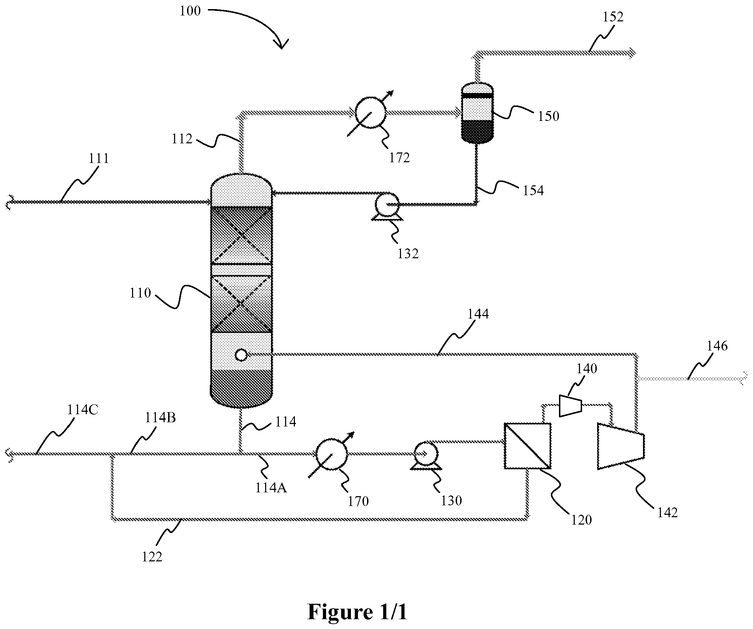

Figure 1 is an exemplary schematic of one contemplated regeneration system.

### Detailed Description

The inventors have discovered that steam for use as stripping medium in a regenerator for a solvent, and especially an aqueous chemical solvent, can be recovered from a portion of the lean solvent using a pervaporation unit. The so recovered steam is then reintroduced into the regenerator, typically after compression to suitable pressure. Most notably, it should be appreciated that the portion of the lean solvent can be selected such that the regenerator has a neutral water balance for any desired degree of solvent regeneration. Such configurations and methods will advantageously reduce energy costs associated with otherwise required steam production and condensation to control the water balance of the regenerator. Most typically, the solvent is an aqueous solvent comprising water and at least one organic and/or inorganic reagent that is suitable for the capture (adsorption or absorption) and recovery of a desired component (typically an acid gas such as CO2 and/or H2S), and the desired component is at least partially released in the regenerator by some combination of energy (*e.g.*, heat) and/or pressure reduction. As used herein, the term "pervaporation unit" refers to a system in which a liquid feed is fed to a membrane, wherein the membrane is configured to separate a vapor permeate (through the membrane) from a liquid retentate.

In one especially preferred aspect, steam for stripping a solvent in a regenerator is drawn from at least a portion of the regenerated solvent using a separation system that preferentially (*i.e.*, greater 50% selective), and more preferably selectively (*i.e.*, greater 90% selective) separates water from the organic component of a solvent. In especially preferred aspects, the separation system is a pervaporation system in which a membrane provides selective permeability for water, and the solvent is an aqueous solution of an amine. For example, suitable amines include various alkanolamines such as monoethanolamine (MEA), diethanolamine (DEA), methyldiethanolamine MDEA, etc., or other amines such as diisopropylamine (DIPA) or diglycolamine (DGA).

For example, **Figure 1** depicts one preferred schematic configuration 100 in which a regenerator 110 is configured to receive from an absorber (not shown) a rich solvent stream 111 and to produce a regenerator overhead stream 112, typically containing CO2 and/or H2S. The regenerator further produces a regenerator bottom product stream 114 (*i.e.*, the regenerated aqueous solvent). Desorption of the CO2 and/or H2S in the regenerator is effected in large part by stripping medium 144, typically steam, which is introduced near the bottom of the regenerator 110. The regenerator overhead stream 112 is cooled in overhead condenser 172 in conventional manner, and the condensed water is separated in overhead separator drum 150 and returned to the regenerator 110 via stream 154 and reflux pump 132. Acid gas stream 152 is fed to a location as suitable (e.g., H2S to Claus plant, or CO2 to EOR or sequestration).

The regenerator bottom product 114 is then split into a first portion 114A that is fed to the pervaporation unit 120, while a second portion 114B is fed as regenerated (lean) solvent to the absorber. Where desired, the first portion 114A is cooled in cooler 170 to a desired temperature (*e.g.*, between 40-90 °C), and pumped in pump 130 to suitable pressure (*e.g.*, between 1-5 bar, more typically between 5-30 bar, and most typically between 1 and 50 bar). However, it should be noted that a cooler may not be required as cooling is predominantly used to protect the membrane of the pervaporation unit. Where needed, a vacuum pump 140 may be employed at the permeate side of the pervaporation unit 120 to assist in generation of a proper pressure gradient across the pervaporation membrane. It should be noted that contrary to common use, the permeate is not condensed. Thus, it is generally preferred that the steam permeate from the pervaporation unit is then brought to regenerator pressure via compressor (or ejector) 142, if required, and introduced into the regenerator 110 as stripping medium. Start-up and/or additional steam may be supplied to the regenerator 110 via line 146, though this stream generally has zero flow during normal operation. The retentate from the pervaporation unit is fed to the absorber as stream 122, which is most preferably combined with the second portion 114B to so form a combined lean solvent stream 114C.

In an especially contemplated aspect of the inventive subject matter, the flow rate of the first portion of the solvent that is fed to the pervaporation membrane is dependent on the regenerator steam demand and the efficiency of the membrane. Most preferably, the steam demand is limited such that the desired degree of removal of the acid gas from the solvent is achieved in the regenerator, as increased steam injection results in over-stripping of the solvent at increased operating cost. Once the steam demand is determined, the flow rate of regenerated solvent that is fed to the membrane is set such that the water removal rate is equal to the required steam rate, which will typically depend on the type of membrane, the pressure gradient across the membrane, and the solvent concentration. It should be appreciated that in this manner, the water balance in the overall plant is unaffected by the pervaporation membrane unit. Thus, when the two portions (*i.e.*, the retentate and the second portion) of the lean solvent are remixed upstream of the absorber, proper solvent composition will be achieved. For example, a membrane with a relatively high water removal rate would require a smaller portion of the regenerated solvent flow than would a membrane with a lower water removal rate. In order to minimize operating and capital costs, it is generally preferred to minimize the flow rate of regenerated solvent through the membrane for a given desired steam rate.

Of course, it should be recognized that the flow rate ratio of first to second portion of the regenerated solvent will depend on multiple factors, and a person of ordinary skill in the art will be readily able to ascertain the appropriate flow ratio. While not limiting to the inventive subject matter, it is typically preferred that the entire steam demand of the regenerator is provided by the pervaporation unit. However, in less preferred aspects, the pervaporation unit may be used to supplement a steam stream or other regeneration medium that is generated from a source other than the lean solvent (*e.g.* a typical steam-heated reboiler). It should also be recognized that certain operating conditions may exist where additional steam may be imported (*e.g*., during start-up).

Among other advantages of the above system and methods, it should be appreciated that direct steam injection into the regenerator column is an effective method for introducing into the system the energy required for releasing the captured component from the solvent. However, any steam injection results in water addition to the solvent system, which must be subsequently removed to maintain the solvent composition. The configurations and methods presented herein offer a unique solution to this problem. Water is removed from the aqueous solvent leaving the bottom of a regenerator using pervaporation separation where permeate is concentrated in water that is already in the vapor phase. This permeate vapor stream is then compressed to the regenerator pressure and reintroduced to the bottom of the regenerator. The so internally generated steam is then used to regenerate the solvent, and is condensed in the column or in the overhead condenser and returned to the column as reflux. The condensed water is again separated out from the solvent in the pervaporation membrane. Consequently, it should be appreciated that while live steam is added to the regenerator, external water or steam sources are not required, thus maintaining a neutral water balance for the regenerator.

Depending on the operating conditions of the regenerator various modifications may be implemented to facilitate the pervaporation process and to maintain the advantages of the present system. For example, where the solvent has a relatively high temperature, one or more coolers, heat exchangers (*e.g*., using coolant or rich solvent) may be used to reduce the temperature of the lean solvent to a temperature that reduces membrane deterioration of the pervaporation unit. On the other hand, where the lean solvent temperature is relatively low, one or more heat sources may provide heat to the portion of the lean solvent. Similarly, where the operating pressure of the regenerator is relatively low (*i.e.*, below a pressure suitable for operation of the pervaporation unit), a pump may be used to boost the pressure differential across the membrane. Alternatively, or additionally, a vacuum pump may be coupled to the steam side of the pervaporation unit to facilitate or enhance separation of steam from the lean solvent. Most typically, regenerator configurations for regeneration of an acid gas absorbing solvent will include at least one of a vacuum unit downstream and a pump upstream of the pervaporation unit to provide for an adequate pressure gradient and steam release.

With respect to appropriate pervaporation units it should be recognized that there are various pervaporation units known in the art, and all of those are deemed suitable for use in conjunction with the teachings presented herein. However, it is especially preferred that the pervaporation unit comprises a membrane system that is permeable for water / steam and largely impermeable for organic solvents. For example, one suitable pervaporation system is described in U.S. Pat. No. 5,051,188. Further known suitable membrane systems include those described in U.S. Pat. No. 5,248,427, 5,707,522, 7,166,224, 6,755,975, and U.S. Pat. App. No. 2008/0099400.

In further contemplated aspects of the inventive subject matter, it should be noted that the configurations and methods presented herein can also be employed in systems other than amine-solvent regeneration.

## Claims

1. A method of regenerating a solvent, comprising:
stripping the solvent in a regenerator (110) using steam as a stripping medium to produce a regenerator overhead (112) and a regenerator bottom product (114);
passing at least a portion (114A) of the regenerator bottom product through a pervaporation unit (120) to produce a vapor phase (144) that is enriched in steam;
and feeding the vapor phase (144) as stripping medium into a bottom portion of the regenerator (110) to thereby supply at least part of the stripping medium.

2. The method of claim 1 further comprising a step of increasing pressure of the portion of the regenerator bottom product (114A) upstream of the pervaporation unit (120) and operating a vacuum unit (140) downstream of the pervaporation unit to produce a pressure gradient across the pervaporation unit.

3. The method of claim 1 further comprising a step of compressing the vapor phase (144) prior to feeding the vapor phase into the regenerator (110).

4. The method of claim 3 wherein the step of compressing the vapor phase (144) comprises use of a compressor or an ejector (142).

5. The method of claim 1 wherein the portion of the regenerator bottom product (114A) is selected such that an amount of steam in the vapor phase (144) is equal to an amount of steam required for regeneration of the solvent in the regenerator to a desired degree.

6. The method of claim 1 wherein the portion of the regenerator bottom product (114A) is between 70 vol% and 100 vol% of total regenerator bottom product.

7. The method of claim 1 wherein the solvent is an amine-based solvent.

8. The method of claim 1 further comprising a step of combining another portion of the regenerator bottom product (114B) with retentate (122) from the pervaporation unit (120) to form a combined lean solvent (114C).

9. The method of claim 8 further comprising a step of feeding the combined lean solvent (114C) to an absorber.

10. A solvent regeneration system, comprising:
an absorber configured to receive a process gas and to contact the process gas in counter-current fashion with a lean chemical solvent (114C) and wherein an acid gas is at least partially absorbed by the lean chemical solvent to produce a rich solvent (111) and a purified process gas,
a steam regenerator (110) that is configured to receive the rich solvent (111) and allow use of steam as a stripping medium to so produce a regenerator overhead (112) and a regenerator bottom product (114);
a pervaporation unit (120) fluidly coupled to the steam regenerator (110) to allow feeding of at least a portion of the regenerator bottom product (114A) to the pervaporation unit (120) to so produce a vapor phase (144) that is enriched in steam and a retentate (122);
a conduit fluidly coupled to the pervaporation unit (120) and configured to allow feeding of the vapor phase (144) into a bottom portion of the regenerator (110) to thereby supply at least part of the stripping medium; and
a second conduit that allows combination of the retentate (122) from the pervaporation unit (120) and another portion of the regenerator bottom product (114B) to form the lean chemical solvent (114C).

11. The regeneration system of claim 10 further comprising a pump (170) that is fluidly and upstream coupled to the pervaporation unit (120), and a vacuum pump (140) that is fluidly and downstream coupled to the pervaporation unit (120) and is configured to allow generation of a pressure gradient across the pervaporation unit.

12. The regeneration system of claim 10 further comprising a compressor (142) fluidly coupled to the pervaporation unit (120) and configured to provide the vapor phase (144) as a compressed stream to the steam regenerator (110).

## Patentansprüche

1. Verfahren zum Regenerieren eines Lösungsmittels, umfassend:
Strippen des Lösungsmittels in einem Regenerator (110) unter Verwendung von Dampf als Strippmedium zur Herstellung eines Regeneratorkopfprodukts (112) und eines Regeneratorbodenprodukts (114);
Durchlassen mindestens eines Teils (114A) des Regeneratorbodenprodukts durch eine Pervaporationseinheit (120), um eine Dampfphase (144) zu erzeugen, die mit Dampf angereichert ist; und
Einspeisen der Dampfphase (144) als Strippmedium in einen Bodenabschnitt des Regenerators (110), um dadurch mindestens einen Teil des Strippmediums zuzuführen.

2. Verfahren nach Anspruch 1, ferner umfassend einen Schritt des Erhöhens des Drucks des Teils des Regeneratorbodenprodukts (114A) stromaufwärts der Pervaporationseinheit (120) und Betreiben einer Vakuumeinheit (140) stromabwärts der Pervaporationseinheit zum Erzeugen eines Druckgradienten über der Pervaporationseinheit.

3. Verfahren nach Anspruch 1, ferner umfassend einen Schritt des Verdichtens der Dampfphase (144) vor dem Einspeisen der Dampfphase in den Regenerator (110).

4. Verfahren nach Anspruch 3, wobei der Schritt des Verdichtens der Dampfphase (144) die Verwendung eines Kompressors oder eines Ejektors (142) umfasst.

5. Verfahren nach Anspruch 1, wobei der Teil des Regeneratorbodenprodukts (114A) so gewählt wird, dass eine Dampfmenge in der Dampfphase (144) gleich einer Dampfmenge ist, die zur Regeneration des Lösungsmittels bis zu einem gewünschten Grad im Regenerator erforderlich ist.

6. Verfahren nach Anspruch 1, wobei der Teil des Regeneratorbodenprodukts (114A) zwischen 70 Vol.-% und 100 Vol.-% des gesamten Regeneratorbodenprodukts beträgt.

7. Verfahren nach Anspruch 1, wobei das Lösungsmittel ein aminbasiertes Lösungsmittel ist.

8. Verfahren nach Anspruch 1, ferner umfassend einen Schritt des Kombinierens eines weiteren Teils des Regeneratorbodenprodukts (114B) mit Retentat (122) aus der Pervaporationseinheit (120), um ein kombiniertes mageres Lösungsmittel (114C) zu bilden.

9. Verfahren nach Anspruch 8, ferner umfassend einen Schritt des Einspeisens des kombinierten mageren Lösungsmittels (114C) in einen Absorber.

10. Lösungsmittel-Regenerationssystem, umfassend:
einen Absorber, der konfiguriert ist, um ein Prozessgas aufzunehmen und das Prozessgas im Gegenstrom mit einem mageren chemischen Lösungsmittel (114C) in Kontakt zu bringen, und wobei ein saures Gas mindestens teilweise von dem mageren chemischen Lösungsmittel absorbiert wird, um ein fettes Lösungsmittel (111) und ein gereinigtes Prozessgas zu erzeugen,
einen Dampfregenerator (110), der konfiguriert ist, das fette Lösungsmittel (111) aufzunehmen und die Verwendung von Dampf als Strippmedium zu ermöglichen, um so einen Regeneratorkopfprodukt (112) und ein Regeneratorbodenprodukt (114) zu erzeugen;
eine Pervaporationseinheit (120), die fluidisch mit dem Dampfregenerator (110) verbunden ist, um das Einspeisen von mindestens einem Teil des Regeneratorbodenprodukts (114A) in die Pervaporationseinheit (120) zu ermöglichen, um so eine Dampfphase (144) zu erzeugen, die mit Dampf und einem Retentat (122) angereichert ist;
eine Leitung, die mit der Pervaporationseinheit (120) fluidisch verbunden und konfiguriert ist, um die Dampfphase (144) in einen Bodenabschnitt des Regenerators (110) einzuspeisen, um dadurch mindestens einen Teil des Strippmediums zuzuführen; und
eine zweite Leitung, die eine Kombination des Retentats (122) aus der Pervaporationseinheit (120) und eines anderen Teils des Regeneratorbodenprodukts (114B) ermöglicht, um das magere chemische Lösungsmittel (114C) zu bilden.

11. Regenerationssystem nach Anspruch 10, ferner umfassend eine Pumpe (170), die fluidisch und stromaufwärts mit der Pervaporationseinheit (120) gekoppelt ist, und eine Vakuumpumpe (140), die fluidisch und stromabwärts mit der Pervaporationseinheit (120) gekoppelt und konfiguriert ist, um die Erzeugung eines Druckgradienten über die Pervaporationseinheit zu ermöglichen.

12. Regenerationssystem nach Anspruch 10, ferner umfassend einen Kompressor (142), der fluidisch mit der Pervaporationseinheit (120) gekoppelt ist und konfiguriert ist, um die Dampfphase (144) als einen verdichteten Strom an den Dampfregenerator (110) bereitzustellen.

## Revendications

1. Procédé de régénération d'un solvant, comprenant de :
stripper le solvant dans un régénérateur (110) en utilisant de la vapeur comme agent de stripage pour produire un courant supérieur de régénérateur (112) et un produit de fond de régénérateur (114) ;
passer au moins une partie (114A) du produit de fond de régénérateur à travers une unité de pervaporation (120) pour produire une phase vapeur (144) qui est enrichie en vapeur ; et
alimenter la phase vapeur (144) comme agent de stripage dans une partie inférieure du régénérateur (110) pour ainsi fournir au moins une partie de l'agent de stripage.

2. Procédé selon la revendication 1, comprenant en outre une étape d'augmentation de la pression de la partie du produit de fond de régénérateur (114A) en amont de l'unité de pervaporation (120) et d'actionnement d'une unité de vide (140) en aval de l'unité de pervaporation pour produire un gradient de pression à travers l'unité de pervaporation.

3. Procédé selon la revendication 1, comprenant en outre une étape de compression de la phase vapeur (144) avant d'alimenter la phase vapeur dans le régénérateur (110).

4. Procédé selon la revendication 3, dans lequel l'étape de compression de la phase vapeur (144) comprend l'utilisation d'un compresseur ou d'un éjecteur (142).

5. Procédé selon la revendication 1, dans lequel la partie du produit de fond de régénérateur (114A) est choisie de façon que la quantité de vapeur dans la phase vapeur (144) soit égale à la quantité de vapeur nécessaire pour régénérer le solvant dans le régénérateur à un degré souhaité.

6. Procédé selon la revendication 1, dans lequel la partie du produit de fond de régénérateur (114A) est entre 70 % en volume et 100 % en volume du produit de fond de régénérateur total.

7. Procédé selon la revendication 1, dans lequel le solvant est un solvant à base d'aminé.

8. Procédé selon la revendication 1, comprenant en outre une étape consistant à combiner une autre partie du produit de fond de régénérateur (114B) avec un rétentat (122) de l'unité de pervaporation (120) pour former un solvant pauvre combiné (114C) .

9. Procédé selon la revendication 8, comprenant en outre une étape consistant à alimenter le solvant pauvre combiné (114C) dans un absorbeur.

10. Système de régénération de solvant, comprenant :
un absorbeur conçu pour recevoir un gaz de procédé et pour mettre en contact le gaz de procédé à contre-courant avec un solvant pauvre combiné (114C), et dans lequel un gaz acide est au moins en partie absorbé par le solvant chimique pauvre pour produire un solvant riche (111) et un gaz de procédé purifié ;
un régénérateur de vapeur (110) conçu pour recevoir le solvant riche (111) et permettre l'utilisation de vapeur comme agent de stripage pour ainsi produire un courant supérieur de régénérateur (112) et un produit de fond de régénérateur (114) ;
une unité de pervaporation (120) couplée fluidiquement au régénérateur de vapeur (110) pour permettre l'alimentation d'au moins une partie du produit de fond de régénérateur (114A) dans l'unité de pervaporation (120) pour ainsi produire une phase vapeur (144) enrichie en vapeur et un rétentat (122) ;
une conduite couplée fluidiquement à l'unité de pervaporation (120) et conçue pour permettre l'alimentation de la phase vapeur (144) dans une partie inférieure du régénérateur (110) pour ainsi fournir au moins une partie de l'agent de stripage ; et
une deuxième conduite qui permet de combiner le rétentat (122) de l'unité de pervaporation (120) et une autre partie du produit de fond de régénérateur (114B) pour former le solvant chimique pauvre (114C).

11. Système de régénération selon la revendication 10, comprenant en outre une pompe (170) fluidiquement couplée en amont à l'unité de pervaporation (120) et une pompe à vide (140) fluidiquement couplée en aval à l'unité de pervaporation (120), et conçu pour permettre de générer un gradient de pression à travers l'unité de pervaporation.

12. Système de régénération selon la revendication 10, comprenant en outre un compresseur (142) couplé fluidiquement à l'unité de pervaporation (120) et conçu pour fournir la phase vapeur (144) sous forme de vapeur comprimée au régénérateur de vapeur (110).
